# EUROPÄISCHE PATENTSCHRIFT

(11) **EP 2 465 625 B1**
(45) Veröffentlichungstag und Bekanntmachung des Hinweises auf die Patenterteilung: **29.05.2013**
(21) Anmeldenummer: 11192279.5
(22) Anmeldetag: 07.12.2011
(51) Int. Cl.: B23B 27/10, B23D 59/02, B23Q 11/10, B24B 27/06, C01B 33/035, C30B 13/00, C30B 15/04, C30B 25/18, C30B 29/06, B28D 5/02

(54) **Verfahren und Vorrichtung zur Herstellung von Silicium-Dünnstäben**
Method and device for producing thin silicon rods
Procédé et dispositif destinés à la fabrication de tiges fines de silicium

(30) Priorität: 17.12.2010 DE 102010063407
(43) Veröffentlichungstag der Anmeldung: 20.06.2012
(73) Patentinhaber: Wacker Chemie AG, 81737 München (DE)
(72) Erfinder: Schantz, Matthaeus, 84367 Reut (DE); Lichtenegger, Bruno, 84547 Emmerting (DE)
(74) Vertreter: Killinger, Andreas

(56) Entgegenhaltungen:
- JP-A- 2005 112 662
- US-A1- 2009 269 493
- US-A1- 2010 077 897

## Beschreibung

Gegenstand der Erfindung ist ein Verfahren sowie eine Vorrichtung zur Herstellung von Silicium-Dünnstäben.

Silicium-Dünnstäbe werden zur Abscheidung von polykristallinem Silicium verwendet.

Polykristallines Silicium (kurz: Polysilicium) dient als Ausgangsmaterial bei der Herstellung von einkristallinem Silicium mittels Tiegelziehen (Czochralski- oder CZ-Verfahren)-oder mittels Zonenschmelzen (Floatzone oder FZ-Verfahren). Dieses einkristalline Silicium wird in Scheiben (Wafer) zertrennt und nach einer Vielzahl von mechanischen, chemischen und chemo-mechanischen Bearbeitungen in der Halbleiterindustrie zur Fertigung von elektronischen Bauelementen (Chips) verwendet.

Insbesondere wird aber polykristallines Silicium in verstärktem Maße zur Herstellung von ein- oder multikristallinem Silicium mittels Zieh- oder Gieß-Verfahren benötigt, wobei dieses ein-oder multikristalline Silicium zur Fertigung von Solarzellen für die Photovoltaik dient.

Das polykristalline Silicium, oft auch kurz Polysilicium genannt, wird üblicherweise mittels des Siemens-Prozesses hergestellt. Dabei werden in einem glockenförmigen Reaktor ("Siemens-Reaktor") Dünnstäbe aus Silicium durch direkten Stromdurchgang erhitzt und ein Reaktionsgas enthaltend eine Silicium enthaltende Komponente und Wasserstoff eingeleitet.

Als Silicium enthaltende Komponenten kommen beispielsweise Siliciumhalogenverbindungen wie Siliciumchlorverbindungen, insbesondere Chlorsilane in betracht. Die Silicium enthaltende Komponente wird zusammen mit Wasserstoff in den Reaktor eingeleitet. Bei Temperaturen von mehr als 1000 °C wird auf den Dünnstäben Silicium abgeschieden. Dabei ergibt sich schließlich ein Stab mit polykristallinem Silicium. In DE 1 105 396 sind die Grundprinzipien des Siemens-Prozesses beschrieben.

Bezüglich der Herstellung von Dünnstäben ist aus DE 1 177 119 bekannt, Silicium auf einem Trägerkörper aus Silicium abzuscheiden, anschließend davon einen Teil abzutrennen und diesen abgetrennten Teil wiederum als Trägerkörper für die Abscheidung von Silicium zu verwenden. Das Abtrennen kann mechanisch, z.B. mittels Zersägen, oder elektrolytisch mittels eines Flüssigkeitsstrahls erfolgen. Die mechanische Zerteilung erfolgt in Längsrichtung. Die Schnittebenen können im Winkel zueinander durch die geometrische Achse des Siliciumstabs gelegt werden. Es wird auch vorgeschlagen, durch parallel geführte Schnitte, die durch den Siliciumstab parallel zu seiner Achse hindurchgehen, Bänder oder Streifen abzuschneiden, die als Träger für neue Abscheidungsprozesse dienen. Solche Parallelschnitte können in einem einzigen Arbeitsgang gleichzeitig vollzogen werden.

US 2010/0077897 A1 offenbart eine Vorrichtung zur Erzeugung von Dünnstäben, bei dem ein Siliciumstab zunächst entlang seiner Achse in eine Vielzahl von Platten bzw. Brettern zerteilt werden kann, wobei diese Platten bzw. Bretter anschließend in axialer Richtung erneut geschnitten werden, um deren Dicke zu reduzieren. Die Vorrichtung sieht auch eine Vielzahl von horizontal angeordneten Sägeblättern vor, die es ermöglichen, in einem Arbeitsgang eine Vielzahl jener Platten bzw. Bretter zu zerteilen. Im Wesentlichen geht es darum, beim Zersägen der Platten Verbiegungen und Beschädigungen zu vermeiden, indem diese während des Sägens auf einem Tisch befestigt und stirnseitig unterstützt werden.

Es ist also bekannt, Dünnstäbe mittels verschiedener Säge- oder Schneidverfahren aus zuvor mittels des Siemens-Prozesses hergestellten Siliciumstäben zu erzeugen.

Die Prozessbedingungen für die Abscheidung von Polysilicium im Siemensprozess werden üblicherweise aus wirtschaftlichen Gründen so eingestellt, dass eine möglichst hohe Abscheiderate resultiert.

Dabei werden dann Stäbe aus Polysilicium mit großem Durchmesser, z.B. größer als 100 mm, produziert. Solche Stäbe weisen aber hohe thermische Spannungen auf, die bei der weiteren mechanischen Bearbeitung Probleme bereiten können.

Bei ungeeigneter Prozessführung in den herkömmlichen Säge- und Schneidverfahren können die Stäbe brechen. Die erzeugten Dünnstäbe können verziehen und sind dann für den späteren Einsatz im Siemensprozess ungeeignet.

Die aus dem Stand der Technik bekannten Verfahren zur Erzeugung von Dünnstäben aus Polysilicium-Stäben mit großem Durchmesser, die erhebliche thermische Spannungen aufweisen, führen dazu, dass es zu einem Bruch entweder des abgeschnittenen Werkstückes oder des zu schneidenden Polysilicium-Stabes kommt. In weniger dramatischen Fällen entstehen oft Abplatzungen, die ebenso unerwünscht und daher zu vermeiden sind.

In WO 2010/039570 A2 wird beschrieben, dass Spannungen, die bei der Produktion von Stäben aus Polysilicium im Siemens-Prozess entstehen, mittels thermischer Behandlung (Annealen) wieder entfernt werden können. Die bei der Abscheidung entstandenen Spannungen werden auf diese Weise erfolgreich eliminiert, so dass der Stab ohne weiteres für die Produktion von Dünnstäben mit den herkömmlichen aus dem Stand der Technik bekannten Säge-und Schneidverfahren weiterverarbeitet werden kann.

Ein Nachteil dieses Verfahrens besteht jedoch darin, dass ein erheblicher Aufwand sowohl in energetischer Sicht als auch durch zusätzliche Vorrichtungen unternommen werden muss, um die Stäbe für das Schneiden von Dünnstäben vorzubereiten.

Zusätzlich besteht beim Annealen der Stäbe die Gefahr, dass oberflächliche Verunreinigungen in den Bulk des Materials hinein diffundieren und so das Endprodukt verunreinigen. Um dies zu verhindern, wäre ein zusätzlicher Reinigungsschritt (wie ein Ätzschritt) direkt vor dem Annealingschritt erforderlich, was aber einen zusätzlichen erheblichen Mehraufwand bedeuten würde.

In DE 100 19 601 B4 wird ein Verfahren beschrieben, bei dem Stäbe aus Polysilicium, die eine thermische Spannung aufweisen, quer zur Längsachse so geschnitten werden, dass keine Abplatzungen oder Risse entstehen. Die Stäbe werden dabei während des Schneidens um die eigene Längsachse gedreht, während ein Schneidwerkzeug den Stab von außen her ablängt. Dabei werden aber keine Dünnstäbe erzeugt, sondern Vorstäbe für FZ oder Nachchargierstäbe für CZ.

Daher bestand die Aufgabe der Erfindung darin, die oben beschriebenen Nachteile bei der Dünnstabproduktion infolge von thermischen Spannungen in den Siliciumstäben zu vermeiden, ohne auf aufwändige thermische Behandlungen zurück greifen zu müssen.

Die Aufgabe wird gelöst durch ein Verfahren zur Herstellung von Silicium-Dünnstäben, umfassend folgende Schritte: a) Bereitstellen eines Stabes aus Silicium; b) Sequentielles Abschneiden von Brettern einer bestimmten Dicke vom Stab mittels einer Sägevorrichtung, wobei der Stab zwischen zwei aufeinanderfolgenden Schnitten jeweils derart um 90° oder um 180° axial gedreht wird, so dass von vier aufeinanderfolgenden Schnitten paarweise jeweils zwei der vier Schnitte auf radial gegenüberliegenden Seiten des Stabes erfolgen oder wobei das Abschneiden der Bretter simultan gleichzeitig an radial gegenüberliegenden Seiten des Stabes erfolgt; c) Zersägen der abgeschnittenen Bretter zu Dünnstäben mit rechteckigem Querschnitt.

Die Aufgabe wird auch gelöst durch ein Verfahren zu Herstellung von Silicium-Dünnstäben, umfassend die Schritte: a) Bereitstellen eines Stabes aus Silicium; b) Erzeugung einer Vielzahl von vertikalen Schnitten über eine gesamte Länge des Stabes mittels einer ersten Sägevorrichtung, wobei die einzelnen Schnitte voneinander beabstandet sind, wobei Abstand der Schnitte und Schnitttiefe gemäß der gewünschten Kantenlänge eines zu erzeugenden Dünnnstabs mit rechteckigem Querschnitt erfolgen; c) Erzeugung eines horizontalen Schnittes in Längsrichtung des Stabes mittels einer zweiten Sägevorrichtung, um Dünnstäbe mit rechteckigem Querschnitt vom Stab abzutrennen; wobei die Schritte b) und c) sequentiell mehrfach hintereinander ausgeführt werden und der Stab zwischen zwei aufeinanderfolgenden Schnitten gemäß c) jeweils derart um 90° oder um 180° axial gedreht wird, so dass von vier aufeinanderfolgenden Schnitten gemäß c) paarweise jeweils zwei der vier Schnitte auf radial gegenüberliegenden Seiten des Stabes erfolgen.

Beide erfindungsgemäße Verfahren eignen sich insbesondere für Stäbe aus ein- oder polykristallinem Silicium mit einem Durchmesser von mehr als 100 mm.

Dabei dürfen die Stäbe eine erhebliche thermische Spannung aufweisen und können dennoch mittels der beiden Verfahren zu Dünnstäben weiterverarbeitet werden. Vorzugsweise werden solche Stäbe beim erfindungsgemäßen Verfahren verwendet und dem Schneidprozess zugeführt.

Die beiden Verfahren unterscheiden sich dadurch, dass im ersten erfindungsgemäßen Verfahren alternierend Bretter vom Stab abgeschnitten werden, die später zu Dünnstäben zersägt werden, während im zweiten erfindungsgemäßen Verfahren zunächst voneinander beabstandete Vertiefungen in den Stab eingebracht werden, so dass durch die horizontalen Schnitte, die dem Abschneiden eines Brettes im ersten erfindungsgemäßen Verfahren entsprechen, bereits die fertigen Dünnstäbe erzeugt werden.

### Beschreibung des ersten erfindungsgemäßen Verfahrens

Zunächst ist ein Stab aus Silicium bereitzustellen. Vorzugsweise handelt es sich um einen Stab aus polykristallinem Silicium, wie er beispielweise durch Abscheidung im Siemens-Prozess erzeugt werden kann.

Von diesem Stab werden sequentiell Bretter einer bestimmten Dicke abgetrennt. Die Dicke dieser Bretter entspricht vorzugsweise einer Kantenlänge eines zu erzeugenden Dünnstabs mit rechteckigem, vorzugsweise quadratischem, Querschnitt.

Erfindungswesentlich ist es, den Stab zwischen zwei aufeinanderfolgenden Schnitten jeweils derart um 90° oder um 180° axial zu drehen, dass von vier aufeinanderfolgenden Schnitten paarweise jeweils zwei der vier Schnitte auf radial gegenüberliegenden Seiten des Stabes erfolgen oder das Abschneiden der Bretter simultan gleichzeitig an radial gegenüberliegenden Seiten des Stabes erfolgt.

Um letztlich Dünnstäbe zu erzeugen, werden die abgeschnittenen Bretter entsprechend zersägt. Das Zersägen eines Brettes in Dünnstäbe erfolgt vorzugsweise simultan gleichzeitig in einem Schritt.

Vorzugsweise wird zuerst ein Brett auf einer Seite des Stabes abgeschnitten. Anschließend wird der Stab um 180° bezüglich seiner Längsachse gedreht. Dann wird ein weiteres Brett auf der radial gegenüberliegenden Seite abgeschnitten. Schließlich wird der Stab wieder um 180° gedreht und das nächste Brett wieder an der gegenüberliegenden radialen Position abgeschnitten.

Dies kann ohne Probleme bis zum letzten Brett weitergeführt werden, ohne dass negative Auswirkungen der thermischen Spannungen erkennbar wären. Der Stab kann hierbei stirnseitig zentriert eingespannt bleiben.

Alternativ könnte der Stab auch gemäß **Tabelle 1** gedreht werden, ohne spannungsbedingte Einflüsse zu erhalten. Dargestellt sind jeweils die Schnittnummer sowie der Drehwinkel bezüglich der Längsachse.

**Tabelle 1**

| Schnitt | Winkel |
|---|---|
| 1 | 0° |
| 2 | 180° |
| 3 | 90° |
| 4 | 270° |
| 5 | 0° |

Hier wird nach dem ersten Schnitt der Stab zunächst um 180° gedreht und geschnitten. Dann erfolgt eine Drehung um 90° in die Gegenrichtung bezüglich der Längsachse des Stabes und anschließend Schnitt 3. Schließlich erfolgt eine Drehung um 180°, so dass gegenüber der Ausgangsposition ein Winkel von 270° resultiert. Schnitt 4 erfolgt also an der dem Schnitt 3 gegenüberliegenden Position am Stab. Dies gilt auch für die Schnitte 1 und 2.

Vorzugsweise wird so vorgegangen, bis die Mitte des Stabes oder bis ein quadratischer Querschnitt erreicht ist. Danach wird zwischen den Winkeln 0° und 180° alterniert.

Somit ist es bevorzugt, jeweils zwei aufeinanderfolgende Schnitte, z.B. die Schnitte 1 und 2, die Schnitte 3 und 4, die Schnitte 5 und 6, usw., an gegenüberliegenden Positionen auf der Mantelfläche des Stabes durchzuführen.

Eine weitere bevorzugte Ausführungsform zeigt **Tabelle 2.**

Hier erfolgen die Schnitte 1 und 3 sowie die Schnitte 2 und 4 an gegenüberliegenden Positionen des Stabes.

**Tabelle 2**

| Schnitt | Winkel |
|---|---|
| 1 | 0° |
| 2 | 90° |
| 3 | 180° |
| 4 | 270° |
| 5 | 0° |

Vorzugsweise wird so vorgegangen, bis die Mitte des Stabes oder bis ein quadratischer Querschnitt erreicht ist. Danach wird zwischen den Winkeln 0° und 180° alterniert.

Eine weitere ganz besonders bevorzugte Ausführungsform besteht darin, den Stab mittels zwei parallelen Schnitten spannungsfrei zu trennen. Hierbei wird zeitgleich ein weiteres Brett auf der gegenüberliegenden Seite geschnitten. Dies ist in **Tabelle 3** gezeigt.

**Tabelle 3**

| Schnitt | Winkel |
|---|---|
| 1 und 2 | 0° und 180° |
| 3 und 4 | 90° und 270° |

Hier erfolgen die beiden Schnitte 1 und 2 parallel auf gegenüberliegenden Seiten. Anschließend wird der Stab um 90° gedreht. Daraufhin erfolgen die Schnitte 3 und 4 ebenfalls auf gegenüberliegenden Seiten.

Vorzugsweise wird so vorgegangen, bis die Mitte des Stabes oder bis ein quadratischer Querschnitt erreicht ist. Danach wird zwischen den Winkeln 0° und 180° alterniert, bis kein Material mehr vorhanden ist.

Eine weitere Ausführungsform zeigt **Tabelle 4.**

Hier erfolgen die parallelen Schnitte stets an den gleichen Positionen.

**Tabelle 4**

| Schnitt | Winkel |
|---|---|
| 1 und 2 | 0° und 180° |

Vorzugsweise erfolgen parallele Schnitte bei den Winkeln 0° und 180°, bis kein Material mehr vorhanden ist.

### Beschreibung des zweiten erfindungsgemäßen Verfahrens und der erfindungsgemäßen Vorrichtung

Zunächst wird ein Stab aus Silicium bereitgestellt. Dabei handelt es sich vorzugsweise um polykristallines Silicium, beispielsweise hergestellt mittels Abscheidung im Siemens-Prozess.

Im ersten Schritt wird eine Vielzahl an vertikalen Schnitten über eine gesamte Länge des Stabes mittels einer ersten Sägevorrichtung erzeugt.

Dabei sind die einzelnen Schnitte voneinander beabstandet.

Der Abstand der Schnitte wird so ausgewählt, dass er der gewünschten Kantenlänge (etwa 5-10 mm) des zu erzeugenden Dünnstabs entspricht. Selbstverständlich ist dabei die Schnittbreite des Schneidwerkzeugs zu berücksichtigen.

Auch die Schnitttiefen der im ersten Schritt erzeugten Schnitte werden gemäß der gewünschten Kantenlänge eines zu erzeugenden Dünnnstabs ausgewählt.

Die zu erzeugenden Dünnstäbe weisen einen rechteckigen, vorzugsweise einen quadratischen Querschnitt auf.

Somit werden im ersten Schritt praktisch die Querschnitte der zu erzeugenden Dünnstäbe gesägt.

Im nächsten Schritt erfolgt dann ein horizontaler Schnitt in Längsrichtung des Stabes mittels einer zweiten Sägevorrichtung.

Dadurch werden letztlich die Dünnstäbe mit rechteckigem Querschnitt vom Stab abgetrennt.

Erfindungswesentlich ist es, den Stab zwischen zwei aufeinanderfolgenden horizontalen Schnitten jeweils derart um 90° oder um 180° axial zu drehen, so dass von vier aufeinanderfolgenden horizontalen Schnitten paarweise jeweils zwei der vier Schnitte auf radial gegenüberliegenden Seiten des Stabes erfolgen.

Erfindungswesentlich für die Vorrichtung zur Durchführung des Verfahrens ist es, dass Mittel vorhanden sind, die ein gleichzeitiges Auftrennen eines abgeschnittenen Brettes ermöglichen.

Die Aufgabe der Erfindung wird auch gelöst durch eine Vorrichtung zur Erzeugung von Dünnstäben aus einem Siliciumstab durch Sägen, beinhaltend eine erste Einheit umfassend eine Vielzahl von Schneidwerkzeugen, ein Rohr mit Schlitzen sowie eine Kühlflüssigkeit zur Kühlung der Schneidwerkzeuge, wobei die Schneidwerkzeuge in die Schlitze des Rohrs eintauchen, eine zweite Einheit umfassend Düsen zum Einbringen von zusätzlicher Kühlflüssigkeit in Schneidspalten des zu bearbeitenden Werkstücks sowie eine dritte Einheit umfassend eine Bandsäge oder eine Drahtsäge oder eine oder mehrere Wellen enthaltend Schneidwerkzeuge.

Die Vorrichtung umfasst drei Einheiten, eine erste Einheit zum parallelen Schneiden einer Vielzahl vertikaler Vertiefungen, die in Längsrichtung des Stabes verlaufen und deren Schnitttiefe etwas größer ist als die Dicke des abgeschnittenen Brettes, eine zweite Einheit zur Zuführung einer geeigneten Kühlflüssigkeit in die geschnittenen Vertiefungen und eine dritte Einheit zum Beibringen eines horizontalen Längsschnitt des Stabes.

Bei der ersten Einheit handelt es sich bevorzugt um eine Welle mit Sägeblättern.

Ebenso bevorzugt ist die Verwendung eines flüssigkeitsgeführten Lasers als Schneidwerkzeug.

Bei der dritten Einheit kann es sich um eine Einfach- oder Doppelwellensäge enthaltend Sägeblätter handeln.

Mit einer derartigen Vorrichtung kann die Durchführung des Verfahrens sowohl bei liegenden als auch bei stehenden Stäben erfolgen.

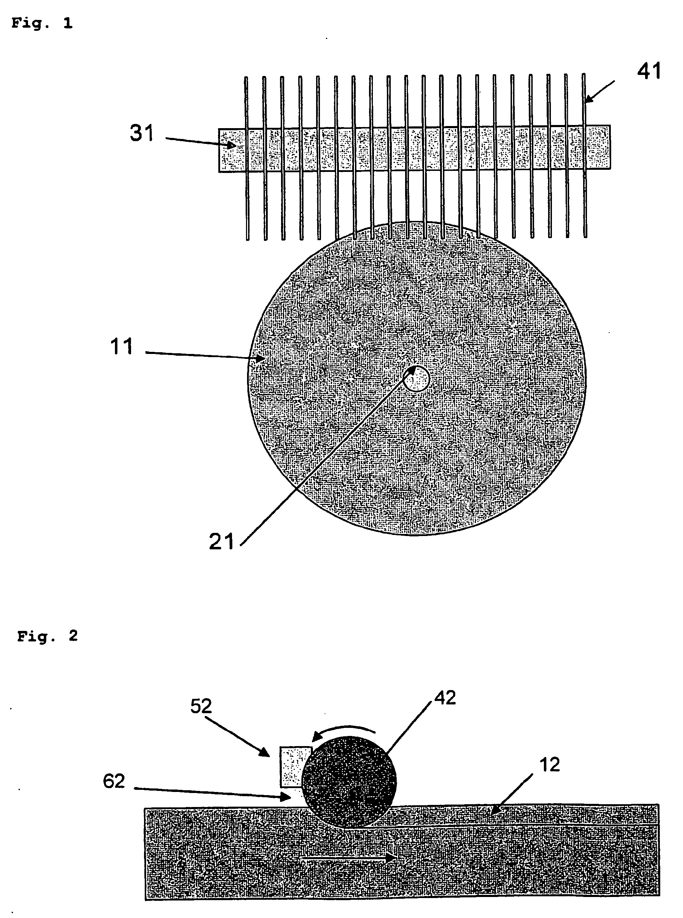

Im Folgenden wird die Verwendung der Vorrichtung bei liegenden Stäben betrachtet. Die Erfindung wird anhand von Fig. 1 bis 6 erläutert.

### Liste der verwendeten Bezugszeichen

**1** Stab / Werkstück
**2** Stabaufnahme
**3** Welle
**4** Sägeblatt
**5** Kühlrohr
**6** Kühlflüssigkeit
**7** Rohr mit Düsen
**8** Hochdruckdüse
**9** Band-/Drahtsäge

### Kurzbeschreibung der Figuren

**Fig. 1** zeigt Stab und Stabaufnahme sowie eine Welle mit Sägeblättern.
**Fig. 2** zeigt Stab sowie Sägeblatt und Kühlrohr.
**Fig. 3** zeigt Stab und Stabaufnahme sowie ein Rohr mit Düsen.
**Fig. 4** zeigt Stab und Sägeblatt und Kühlrohr sowie Rohr mit Hochdruckdüse.
**Fig. 5** zeigt Stab und Stabaufnahme sowie eine Band- oder Drahtsäge und ein Rohr mit Düsen.
**Fig. 6** zeigt Stab und zwei Sägeblätter und Rohr mit Düsen.

**Fig. 1** zeigt insbesondere die Welle mit den darauf befindlichen Sägeblättern.

Die erste Einheit umfasst eine Welle **31** mit axial versetzten Sägeblättern **41,** deren Schnittbreite vorzugsweise zwischen 0,1 und 5 mm (besonders bevorzugt 0,2 bis 0,8 mm) liegt. Falls ein flüssigkeitsgeführter Laser zum Einsatz kommt, liegt die Schnittbreite bei weniger als 0,1 mm, beispielsweise bei 40-80 µm.

Die gewünschte Schnitttiefe dieser Welle **31** mit Sägeblättern **41** beträgt vorzugsweise etwas mehr als die Kantenlänge des fertigen Dünnstabes (bevorzugte Kantenlänge 5-10 mm).

Die Sägetiefe sollte etwas größer sein als die maximal gewünschte Brettdicke.

Die Schnitte werden in axialer Längsrichtung des Stabes ausgeführt.

Der Schneidvorgang kann sowohl in Gleich- wie Gegenlauf erfolgen. Aufgrund der besseren Kühl- und Spanneigenschafton ist der Gleichlauf besonders bevorzugt.

Der Abstand der Sägeblätter **41** abzüglich der Schnittbreite bestimmt die Breite der späteren Dünnstäbe.

Beim Sägen wird der Stab **11** aus Silicium beispielsweise an den beiden Stirnflächen fixiert (Stabaufnahme **21**).

**Fig. 2** zeigt die Anordnung, die die Versorgung der Sägeblätter **42** mit Kühlflüssigkeit **62** sicherstellt.

Die verwendeten Sägeblätter **42** werden jeweils beim Schnitt durch eine Kühlflüssigkeit **62** versorgt, so dass die Kühlflüssigkeit **62** in Laufrichtung des Sägeblattes **42** in den Sägespalt eindringen kann, um Stab **12** zu kühlen und gleichzeitig für den Abtransport des anfallenden Sägeschlamms zu sorgen.

Die Versorgung mit Kühlflüssigkeit erfolgt mittels eines Rohres **52,** das mit Kühltlüssigkeit beaufschlagt ist und das Nuten (Schlitze) umfasst, in welche die Sägeblätter **42** hineinragen.

Dabei ist bevorzugt, dass die geschlitzte Kühlnut etwas breiter ist als das verwendete Schneidblatt.

Hat das Schneidblatt beispielsweise eine Dicke von etwa 8 mm, sollte die Kühlnut eine Breite von etwa 8,5 mm aufweisen.

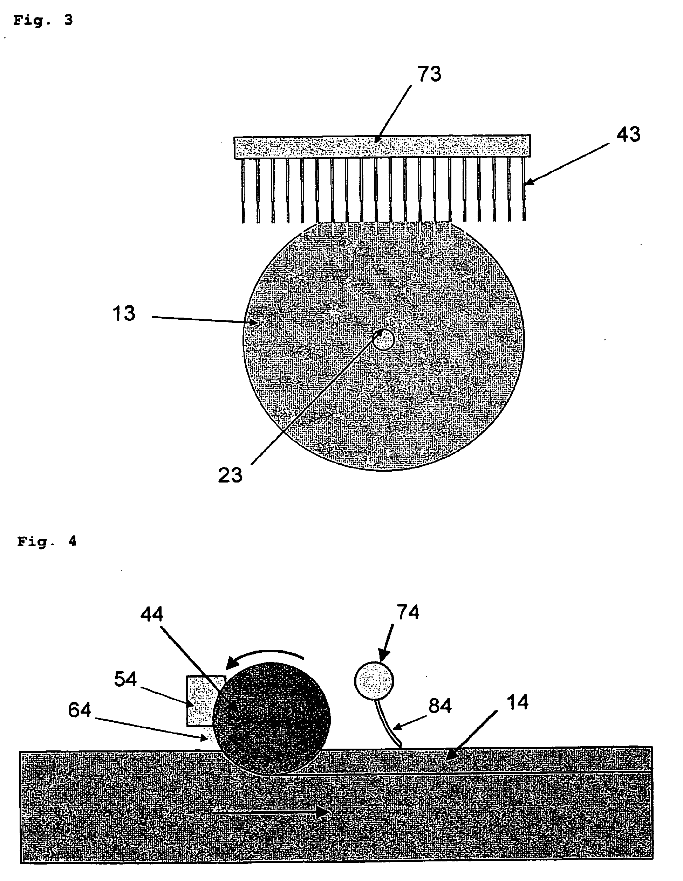

**Fig. 3** zeigt die Versorgung mit Kühlflüssigkeit mittels Hochdruckdüsen in axialer Richtung.

Die zweite Einheit, die in **Fig. 3** gezeigt wird, sorgt dafür, dass zusätzliche Kühlflüssigkeit in die entstandenen Schnittnuten eingebracht wird.

Aufgabe dieser zusätzlichen Vorrichtung zur Kühlmittelversorgung ist zum einen die weitere Säuberung der Schnittnuten vom entstandenen Sägeschlamm und zum anderen die Kühlung des Stabes für den horizontalen Schnitt, der durch die dritte Einheit ausgeführt wird.

Im einfachsten Fall wird die zweite Einheit als Rohr **73** ausgeführt, in dem an einer Seite Löcher im Abstand d angebracht werden, so dass das Wasser aus dem Rohr **73** mit Druck zur Schnittnut transportiert wird.

Der Abstand d entspricht vorzugsweise dem Abstand der Sägeblätter **43** der ersten Einheit.

Um den Druckverlust in Abhängigkeit des Rohres **73** zu vermeiden, wird das Rohr **73** vorzugsweise an mehreren Stellen mit Kühlflüssigkeit versorgt.

Die Strömung der Kühlflüssigkeit in die Nuten verläuft dabei vorzugsweise vertikal zur Achse des Stabes **13.** Dann ist die Schwemmwirkung eher gering.

**Fig. 4** zeigt Hochdruckdüse **84** an Rohr **74,** die im Winkel von fast 90° Kühlflüssigkeit in die Sägenuten presst und so für optimierte Ausschwemmung sorgt.

Es hat sich herausgestellt, dass die Verwendung von Hochdruckdüsen **84** an jeder Öffnung des Rohres **74** besonders vorteilhaft ist.

Diese Hochdruckdüsen **84** können um bis zu 90° gebogen sein, so dass die Strömung der Kühlflüssigkeit parallel zur Längsachse des Stabes **14** eingebracht werden kann. Die Ausschwemmung des Sägeschlammes ist dann auf diese Weise optimiert, ohne dabei die Kühlwirkung zu verschlechtern.

Das Rohr **74** wird von oben mittels mehrerer Versorgungsleitungen mit Flüssigkeit versorgt (nicht dargestellt).

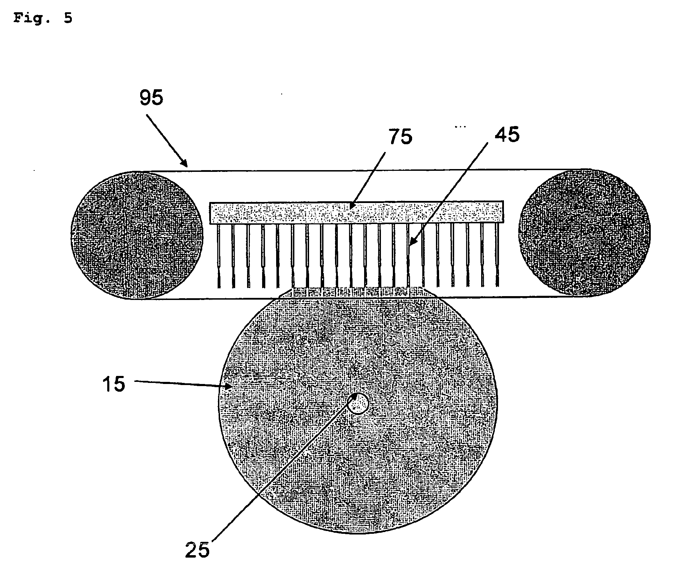

**Fig. 5** zeigt die Führung der Bandsäge (oder Drahtsäge), die den horizontalen Schnitt längs des Werkstoffes ausführt.

Die dritte Einheit sorgt für einen horizontalen Schnitt entlang der axialen Richtung des Stabes **15.**

Die Schnittbreite ist dabei vorzugsweise so eingestellt, dass sie etwas kleiner ist, als die Schnitttiefe der ersten Einheit.

Die dritte Einheit ist dabei beispielsweise als herkömmliche Bandsäge **95** ausgeführt.

Da die Schnittbreite der Bandsäge **95** vorzugsweise so eingestellt ist, dass sie kleiner als die Schnitttiefe der ersten Einheit ist, entsteht während des Sägens ein Kanal am Sägeblatt **45.** Durch diesen Kanal kann Kühlflüssigkeit, die durch die zweite Einheit eingespritzt wurde, vorbeiströmen. Dieser Fluss sorgt für eine optimale Kühlung und transportiert vor allem den entstehenden Sägeschlamm ab.

Zwischen Sägeblättern **45** in Richtung der Mitte von Stab **15** entstehen Kanäle, durch die die Kühlflüssigkeit strömen kann und dabei den entstehenden Sägeschlamm abtransportiert.

Nachdem der Stab **15** mit der zuvor beschriebenen Vorrichtung einmal längs durchgeschnitten wurde, liegen die Dünnstäbe frei und werden nur noch durch Adhäsionskräfte aneinander gehalten.

Sie können mittels eines Vakuumsaugers gefasst und als Gesamtheit vom Stab **15** abgenommen werden.

Adhäsionskräfte wirken aber auch zwischen den Dünnstäben und dem restlichen Werkstück. Diese werden aber drastisch reduziert, da ein Flüssigkeitsaustausch über die Kanäle besteht. Ein sonst einzusetzender Spaltkeil ist also nicht erforderlich.

Um ein Schwingen der während des Sägeprozesses nur auf einer Seite befestigten Dünnstäbe zu verhindern, sollte darauf geachtet werden, dass die Abstände zwischen den Einheiten klein sind und keine Resonanzen zulassen.

Statt nur einer Welle 31 können bei der ersten Einheit auch mehrere Wellen verwendet werden.

Für die erste Einheit können alternativ zu der Vielzahl an Sägeblättern **41** auf einer Welle **31** auch eine Vielzahl an Lasern verwendet werden, die jeweils mittels einer geeigneten Flüssigkeit geführt werden. Als Flüssigkeit zur Führung des Lasers ist Wasser bevorzugt. Besonders bevorzugt ist die Verwendung von Reinstwasser mit der für die Halbleiterindustrie üblichen Reinheit.

Damit ist eine zusätzliche Reduzierung der Schnittbreite auf 40-80 µm, beispielsweise auf 60 µm, möglich, was vorteilhaft ist.

Alternativ kann auch die Schnittreihenfolge zwischen erster und dritter Einheit umgekehrt werden, da für das flüssigkeitsgeführte Laserschneiden ein Abfluss der für den Laser benötigten Flüssigkeit die Schnitteigenschaften verbessert.

Außerdem musste dann die Beibringung der Kühlflüssigkeit in der zweiten Einheit über das Sägeblatt erfolgen, da der hierfür sonst nötige Kanal fehlt.

Die Verwendung von Kühlflüssigkeit bedingt eine Flüssigkeit, deren Oberflächenspannung sehr gering ist, um die Benetzung des Werkstoffes sicherzustellen.

Eine Möglichkeit, die Oberflächenspannung zu minimieren, besteht bekanntermaßen im Zusatz geeigneter Detergenzien.

Die Auswahl geeigneter Stoffe ist aber im Falle der Silicium-Bearbeitung stark eingeschränkt, zumal sie auf dem Werkstück anhaften und evtl. eine Verunreinigung desselben hervorrufen. Insbesondere eignen sich oberflächenaktive Additive wie Netzmittel und Tenside, wie sie in der Halbleiterindustrie zum Beispiel als Zusatz in Poliermitteln zum Einsatz kommen.

Alternativ wird der Stab zusammen mit sauberem Wasser auf eine erhöhte Temperatur, z.B. etwa 80°C, gebracht, da sich mit höherer Temperatur die Oberflächenspannung reduzieren lässt. Dies ist jedoch aufgrund des erhöhten Aufwands weniger bevorzugt.

Die dritte Einheit ist vorzugsweise mit einer Bandsäge 95 ausgeführt.

Es kann aber auch eine Drahtsäge verwendet werden, die mit einem abrasive Partikel enthaltenden Sägeflüssigkeit (Slurry) versorgt wird.

Ebenso kann eine Drahtsäge verwendet werden, bei der die abrasiv wirkenden Partikel im Sägedraht gebunden sind. Besonders bevorzugt ist die Verwendung von Diamantdraht.

Die Verwendung einer Drahtsäge ist besonders vorteilhaft, wenn in der ersten Einheit flüssigkeitsgeführtes Laserschneiden zum Einsatz kommt.

Auch eine Seilsäge ist prinzipiell denkbar, aber wegen der geringen Sägeleistung weniger bevorzugt.

Außerdem kann der Schnitt der dritten Einheit ebenso mit einem Sägeblatt **45** oder mit mehreren Sägeblättern auf gegenüberliegenden Wellen erfolgen.

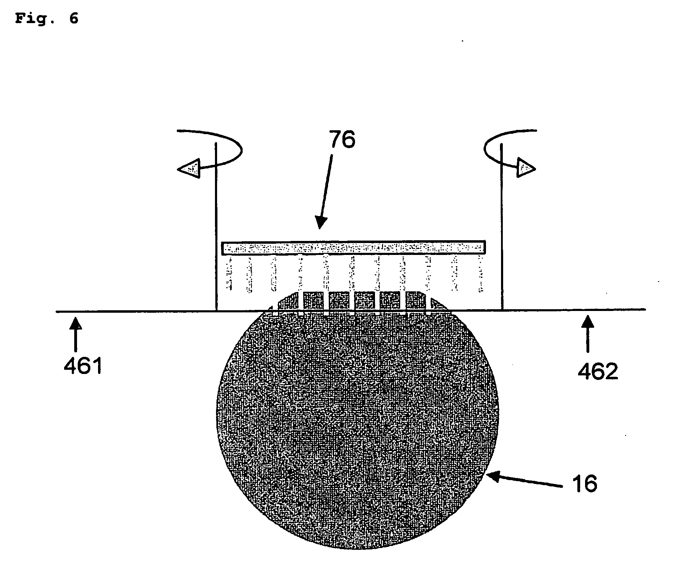

**Fig. 6** zeigt die Anordnung von zwei Sägeblättern **461** und **462,** die den horizontalen Schnitt längs des Stabes **16** ausführen.

Zwischen Sägeblättern **461** bzw. **462** in Richtung Mitte des Stabes **16** entstehen Kanäle, durch die die von Rohr **76** stammende Kühlflüssigkeit strömen kann und dabei den entstehenden Sägeschlamm abtransportiert.

## Patentansprüche

1. Verfahren zur Herstellung von Silicium-Dünnstäben, umfassend folgende Schritte: a) Bereitstellen eines Stabes aus Silicium; b) Sequentielles Abschneiden von Brettern einer bestimmten Dicke vom Stab mittels einer Sägevorrichtung, wobei der Stab zwischen zwei aufeinanderfolgenden Schnitten jeweils derart um 90° oder um 180° axial gedreht wird, so dass von vier aufeinanderfolgenden Schnitten paarweise jeweils zwei der vier Schnitte auf radial gegenüberliegenden Seiten des Stabes erfolgen oder wobei das Abschneiden der Bretter simultan gleichzeitig an radial gegenüberliegenden Seiten des Stabes erfolgt; c) Zersägen der abgeschnittenen Bretter zu Dünnstäben mit rechteckigem Querschnitt.

2. Verfahren nach Anspruch 1, wobei es sich bei Sägevorrichtung um eine Bandsäge oder eine Drahtsäge oder um eine oder mehrere Wellen enthaltend Schneidwerkzeuge handelt.

3. Verfahren zur Herstellung von Silicium-Dünnstäben, umfassend die Schritte: a) Bereitstellen eines Stabes aus Silicium; b) Erzeugung einer Vielzahl von vertikalen Schnitten über eine gesamte Länge des Stabes mittels einer ersten Sägevorrichtung, wobei die einzelnen Schnitte voneinander beabstandet sind, wobei Abstand der Schnitte und Schnitttiefe gemäß der gewünschten Kantenlänge eines zu erzeugenden Dünnnstabs mit rechteckigem Querschnitt erfolgen; c) Erzeugung eines horizontalen Schnittes in Längsrichtung des Stabes mittels einer zweiten Sägevorrichtung, um Dünnstäbe mit rechteckigem Querschnitt vom Stab abzutrennen; wobei die Schritte b) und c) sequentiell mehrfach hintereinander ausgeführt werden und der Stab zwischen zwei aufeinanderfolgenden Schnitten gemäß c) jeweils derart um 90° oder um 180° axial gedreht wird, so dass von vier aufeinanderfolgenden Schnitten gemäß c) paarweise jeweils zwei der vier Schnitte auf radial gegenüberliegenden Seiten des Stabes erfolgen.

4. Verfahren nach Anspruch 3, wobei die erste Sägevorrichtung eine oder mehrere Wellen mit Sägeblättern umfasst.

5. Verfahren nach Anspruch 3, wobei die erste Sägevorrichtung mehrere in Flüssigkeit geführte Laser umfasst.

6. Verfahren nach einem der Ansprüche 3 bis 5, wobei die zweite Sägevorrichtung eine Bandsäge oder eine Drahtsäge oder eine oder mehrere Wellen enthaltend Schneidwerkzeuge umfasst.

7. Vorrichtung zur Erzeugung von Dünnstäben aus einem Siliciumstab durch Sägen, beinhaltend eine erste Einheit umfassend eine Vielzahl von Schneidwerkzeugen, ein Rohr mit Schlitzen sowie eine Kühlflüssigkeit zur Kühlung der Schneidwerkzeuge, wobei die Schneidwerkzeuge in die Schlitze des Rohrs eintauchen, eine zweite Einheit umfassend Düsen zum Einbringen von zusätzlicher Kühlflüssigkeit in Schneidspalten des zu bearbeitenden Werkstücks sowie eine dritte Einheit umfassend eine Bandsäge oder eine Drahtsäge oder eine oder mehrere Wellen enthaltend Schneidwerkzeuge.

8. Vorrichtung nach Anspruch 7, wobei die Schneidwerkzeuge der ersten Einheit Sägeblätter umfassen, die auf einer oder mehreren Wellen angebracht sind.

## Claims

1. Method for producing thin silicon rods, comprising the following steps: a) providing a rod of silicon; b) sequentially cutting slabs having a particular thickness from the rod by means of a sawing device, wherein the rod is respectively rotated axially through 90° or 180° between two successive cuts so that of four successive cuts two of the four cuts respectively take place pairwise on radially opposite sides of the rod or wherein the cutting of the slabs takes place simultaneously together at radially opposite sides of the rod; c) sawing the cut slabs into thin rods having a rectangular cross section.

2. Method according to Claim 1, wherein the sawing device is a band saw or a wire saw or cutting tools containing one or more shafts.

3. Method for producing thin silicon rods, comprising the steps: a) providing a rod of silicon; b) producing a multiplicity of vertical cuts over a total length of the rod by means of a first sawing device, wherein the individual cuts are mutually separated, wherein the spacing of the cuts and the cutting depth are formed according to the desired edge length of a thin rod with a rectangular cross section to be produced; c) producing a horizontal cut in the longitudinal direction of the rod by means of a second sawing device, in order to separate thin rods having a rectangular cross section from the rod; wherein steps b) and c) are sequentially carried out several times in succession and the rod is respectively rotated axially through 90° or 180° between two successive cuts according to c) so that of four successive cuts according to c) two of the four cuts respectively take place pairwise on radially opposite sides of the rod.

4. Method according to Claim 3, wherein the first sawing device comprises one or more shafts having saw blades.

5. Method according to Claim 3, wherein the first sawing device comprises a plurality of lasers guided in liquid.

6. Method according to one of Claims 3 to 5, wherein the second sawing device comprises a band saw or a wire saw or cutting tools containing one or more shafts.

7. Device for producing thin rods from a silicon rod by sawing, containing a first unit comprising a multiplicity of cutting tools, a tube having slots, and a cooling liquid for cooling the cutting tools, the cutting tools entering the slots in the tube, a second unit comprising nozzles for introducing additional cooling liquid into cutting kerfs of the workpiece to be processed, and a third unit comprising a band saw or a wire saw or cutting tools containing one or more shafts.

8. Device according to Claim 7, wherein the cutting tools of the first unit comprise saw blades which are fitted on one or more shafts.

## Revendications

1. Procédé pour la fabrication de barres minces de silicium, comprenant les étapes suivantes : a) mise à disposition d'une barre de silicium ; b) séparation séquentielle de plaques d'une épaisseur déterminée de la barre au moyen d'un dispositif de sciage, la barre étant tournée sur son axe chaque fois de 90° ou de 180° entre deux coupes consécutives de sorte que parmi quatre coupes consécutives chaque fois deux des quatre coupes s'effectuent par paires sur des côtés radialement opposés de la barre ou la séparation des plaques s'effectuant simultanément de façon isochrone sur des côtés radialement opposés de la barre ; c) débitage des plaques découpées, en barres minces à section transversale rectangulaire.

2. Procédé selon la revendication 1, dans lequel le dispositif de sciage consiste en une scie à ruban ou une scie à fil ou en outils de coupe comportant un ou plusieurs arbres.

3. Procédé pour la fabrication de barres minces de silicium, comprenant les étapes : a) mise à disposition d'une barre de silicium ; b) production d'une multiplicité de coupes verticales sur une longueur totale de la barre au moyen d'un premier dispositif de sciage, les coupes individuelles étant écartées les unes des autres, l'écart des coupes et la profondeur de coupe s'effectuant selon la longueur d'arête désirée d'une barre mince à section transversale rectangulaire à produire ;
c) production d'une coupe horizontale dans le sens de la longueur de la barre au moyen d'un deuxième dispositif de sciage, afin de séparer de la barre des barres minces à section transversale rectangulaire ; les étapes b) et c) étant séquentiellement effectuées plusieurs fois successivement et la barre étant tournée sur son axe chaque fois de 90° ou de 180° entre deux coupes consécutives selon c), de sorte que parmi quatre coupes consécutives selon c) chaque fois deux des quatre coupes s'effectuent par paires sur des côtés radialement opposés de la barre.

4. Procédé selon la revendication 3, dans lequel le premier dispositif de sciage comprend un ou plusieurs arbres munis de lames de scie.

5. Procédé selon la revendication 3, dans lequel le premier dispositif de sciage comprend plusieurs lasers guidés dans un liquide.

6. Procédé selon l'une quelconque des revendications 3 à 5, dans lequel le deuxième dispositif de sciage comprend une scie à ruban ou une scie à fil ou des outils de coupe comportant un ou plusieurs arbres.

7. Dispositif pour la production de barres minces à partir d'une barre de silicium par sciage, comportant une première unité comprenant une multiplicité d'outils de coupe, un tube à fentes ainsi qu'un liquide de refroidissement destiné au refroidissement des outils de coupe, les outils de coupe pénétrant dans les fentes du tube, une deuxième unité comprenant des buses pour l'introduction de liquide de refroidissement supplémentaire dans les jeux de coupe de la pièce à travailler ainsi qu'une troisième unité comprenant une scie à ruban ou une scie à fil ou des outils de coupe comportant un ou plusieurs arbres.

8. Dispositif selon la revendication 7, dans lequel les outils de coupe de la première unité comprennent des lames de scie qui sont placées sur un ou plusieurs arbres.
